# EUROPÄISCHE PATENTANMELDUNG

(11) **EP 2 924 845 A1**
(43) Veröffentlichungstag der Anmeldung: **30.09.2015**
(21) Anmeldenummer: 15305400.2
(22) Anmeldetag: 19.03.2015
(51) Int. Cl.: H02J 7/00, H02J 7/02

(54) **Elektrisches/elektronisches Installationsgerät**

(30) Priorität: 25.03.2014 DE 102014104074
(71) Anmelder: Berker GmbH & Co. KG, 58579 Schalksmühle (DE)
(72) Erfinder: Ceuca, Robert, 58579 Schalksmühle (DE); Wenzel, Daniel, 58566 Kierspe (DE)
(74) Vertreter: Nuss, Laurent

(57) **Zusammenfassung**

Es wird ein elektrisches/elektronisches Installationsgerät mit einem wannenförmig ausgeführten Sockelteil vorgeschlagen, welches rückseitig Verbindungselemente zum Anschluss an ein Installationssystem eines Gebäudes aufweist, und welches frontseitig zur Aufnahme einer Ladeeinrichtung vorgesehen ist. Zu dem Zweck, ein elektrisches/elektronisches Installationsgerät zu schaffen, welches, ohne bauliche Änderungen vornehmen zu müssen, in der Lage ist, mobile elektrische/elektronische Geräte (mobile Kleingeräte) mit beliebigen Bauformen haltend aufzunehmen und für deren Aufladung mit elektrischer Energie Sorge zu tragen, weist die Ladeeinrichtung zumindest eine Ladespule zur induktiven Energieübertragung auf, die frontseitig von einer am Sockelteil festlegbaren Zwischenplatte abgedeckt ist, dabei ist die Zwischenplatte frontseitig mit zumindest einem Koppelelement zur Halterung zumindest eines beliebig gestalteten, mobilen elektrischen/elektronischen Gerätes versehen, welches zumindest eine Empfangseinrichtung zum induktiven Energieladen aufweist.

## Beschreibung

Die vorliegende Erfindung geht von einem gemäß Oberbegriff des Hauptanspruches konzipierten elektrischen/elektronischen Installationsgerät aus.

Solche elektrischen/elektronischen Installationsgeräte sind als Ladestation ausgeführt und in der Regel dafür vorgesehen, die Aufladung von mit Akkumulatoren bestückte, mobile elektrische/elektronische Geräte vorzunehmen. Üblicherweise handelt es sich bei den aufzuladenden elektrischen/elektronischen Geräten um mobile Kleingeräte, wie zum Beispiel Mobiltelefone, MP3-Player, mobile Spielkonsolen, elektrische Zahnbürsten, Fernbedienungen usw.. Oftmals muss man, um solche elektrischen Kleingeräte bzw. deren Akkumulatoren aufladen zu können, das zugehörige bzw. passende Ladegerät zur Verfügung haben. Bei der Vielzahl von solchen elektrischen Kleingeräten, die heutzutage in Gebrauch sind, ergibt sich dann, dass auch eine entsprechende Anzahl von unterschiedlichen Ladegeräten notwendig ist, um die Aufladung dieser mobilen Kleingeräte vornehmen zu können. Das führt dazu, dass oftmals erst das passende Ladegerät gesucht werden muss, um dann über eine entsprechende Kabelverbindung mit einer Schutzkontaktsteckdose die Aufladung vornehmen zu können. Solche Kabelverbindungen sind nicht nur unschön, sondern stellen oftmals eine Behinderung oder sogar eine Gefahrenquelle dar. Aus diesem Grunde wurden Ladestationen entwickelt, die eine kabellose Aufladung von mobilen Kleingeräten ermöglichen. Für jedes mobile Kleingerät wird bei einer solchen Ausfühning jedoch eine baulich speziell darauf abgestimmte Ladestation bzw. Ladeschale benötigt, was nicht nur umständlich ist, sondern für den Benutzer auch entsprechend höhere Kosten verursacht.

Ein dem Oberbegriff des Hauptanspruches entsprechendes, als Ladestation ausgeführtes elektrisches/elektronisches Installationsgerät ist durch die DE 20 2012 100 715 U1 bekannt geworden. Diese Ladestation ist mit ihrer Ladeeinrichtung an ein Wechselspannungsnetz angeschlossen und weist einen Halter für das damit zu koppelnde mobile Kleingeräte auf. Die Ladung der zugeordneten mobilen elektrischen/elektronischen Geräte bzw. deren Akkumulatoren erfolgt dabei induktiv, also ohne, dass elektrische Energie führende Kontaktteile miteinander in Verbindung gebracht werden müssen. Bei diesem elektrischen/elektronischen Installationsgerät ist jedoch ein Adapter zur Halterung von zuzuordnenden mobilen Kleingeräten notwendig, der auf die Bauform des zu ladenden mobilen Kleingerätes abgestimmt ist. Ändert sich die Bauform des zu ladenden mobilen Kleingerätes, muss deshalb der Adapter ausgetauscht werden, was kosten- und zeitmäßig mit einem erheblichen Aufwand verbunden ist.

Aus der Druckschrift US 2013/ 0 341 412 A1 ist eine Befestigungsvorrichtung zum Befestigen eines mobilen elektronischen Gerätes an einer glatten Oberfläche mittels zweiseitiger Saugnäpfe bekannt.

Aus der Druckschrift DE 10 2011 101 412 A1 ist ein elektrisches Installationsgerät mit Ladegerät und Ablagemöglichkeit für ein mobiles Audio- und Kommunikationsgerät bekannt. Eine mit einem Gerätesockel verbindbare Zentralscheibe ist mit einer Frontblende vorgesehen, an welche ein schwenkbares Ablagebord über ein Scharniergelenk befestigt ist. Das Ablagebord weist eine Ablagefläche für das mobile Audio- und Kommunikationsgerät sowie an seiner anderen Hauptfläche eine in hochgeklappter Position vertikal gerichtete Ablagebord-RÜckseite auf.

Der vorliegenden Erfindung liegt deshalb die Aufgabe zugrunde ein elektrisches/elektronisches Installationsgerät zu schaffen, welches, ohne bauliche Änderungen vornehmen zu müssen, in der Lage ist, mobile elektrische/elektronische Geräte (mobile Kleingeräte) mit beliebigen Bauformen haltend aufzunehmen und für deren Aufladung mit elektrischer Energie Sorge zu tragen.

Diese Aufgabe wird durch die im kennzeichnenden Teil des Hauptanspruches angegebenen Merkmale gelöst.

Bei einem solchermaßen ausgebildeten elektrischen/elektronischen Installationsgerät ist besonders vorteilhaft, dass dieses sich besonders einfach in bestehende Designlinien, auch von, bereits im Markt befindlicher elektrischer/elektronischer Installationsgeräte integrieren lässt. Vorteilhafterweise weist ein derartig ausgeführtes elektrisches/elektronisches Installationsgerät keine, zur haltenden Aufnahme von mobilen Kleingeräten notwendigen Haltemittel auf, welche um einen wesentlichen Teil über die frontseitige Oberfläche hinausstehen.

Vorzugsweise ist das zumindest eine Koppelelement als ein eine vakuumeffektartige Haltewirkung für das zumindest eine zugeordnete mobile elektrische/elektronische Gerät entwickelndes Haftpad mit Nanostruktur ausgeführt.

Das erwähnte Haftpad mit Nanostruktur kann auch als Haftmatte mit Nanostruktur oder als Nanogrip-Pad bezeichnet werden.

Vorzugsweise weist das Haftpad mit Nanostruktur einen scheibenförmigen ersten Haltebereich und einen den ersten Haltebereich ringförmig umgebenden zweiten Haltebereich auf.

Vorzugsweise weist das mobile elektrische/elektronische Gerät einen im Wesentlichen ebenen Außenflächenabschnitt auf. Vorzugsweise ist der Außenflächenabschnitt zur Befestigung des elektrischen/elektronischen Gerätes an dem Halteelement an das Halteelement anlegbar.

Vorzugsweise weist das Halteelement und/oder das Haftpad mit Nanostruktur und/oder der erste Haltebereich und/oder der zweite Haltebereich wenigstens eine Haltefläche zum Halten des mobilen elektrischen/elektronischen Gerätes auf. Vorzugsweise ist das elektrische/elektronische Gerät durch Anlegen, weiterhin vorzugsweise durch Andrücken, des elektrischen/elektronischen Gerätes und/oder des Außenflächenabschnitts an die Haltefläche an dem Halteelement befestigbar.

Vorzugsweise ist die wenigsten eine Haltefläche mit der Nanostruktur versehen. Vorzugsweise ist die Nanostruktur durch eine Vielzahl an nebeinanderliegenden Ausbildungen gebildet, die die vakuumeffektartige Haltewirkung erzeugen. Vorzugsweise weisen die Ausbildungen eine Größe, die zwischen 1 Nanometer und 1 Mikrometer, weiterhin vorzugsweise zwischen 10 Nanometer und 100 Nanometer, liegt, auf. Vorzugsweise sind die Ausbildungen als Fasern und/oder als Haare und/oder als Härchen und/oder als Schäufelchen und/oder als Krater und/oder als Nanokrater ausgebildet. Vorzugsweise können die Schäufelchen als Spatulae bezeichnet werden. Vorzugsweise können die Härchen als Setae bezeichnet werden.

Vorzugsweise besteht das Halteelement und/oder das Haftpad mit Nanostruktur und/oder der erste Haltebereich und/oder der zweite Haltebereich und/oder die Haltefläche aus einem Polyurethan.

Vorzugsweise weist das Haftpad mit Nanostruktur und/oder der erste Haltebereich und/oder der zweite Haltebereich und/oder die Haltefläche eine kraterartige, insbesondere eine mit einer Vielzahl an nebeneinanderliegenden Nanokratern versehene, Oberfläche auf.

Vorzugsweise dient die Haltefläche und/oder die kraterartige Oberfläche und/oder die Fasern und/oder die Haare und/oder die Härchen und/oder die Schäufelchen und/oder die Krater und/oder die Nanokrater zur Erzeugung einer Haltewirkung mittels Vakuumeffekt. Alternativ oder zusätzlich dient die Haltefläche und/oder die kraterartige Oberfläche und/oder die Fasern und/oder die Haare und/oder die Härchen und/oder die Schäufelchen und/oder die Krater und/oder die Nanokrater zur Erzeugung einer Haltewirkung mittels Van-der-Waals-Kräften.

Weitere vorteilhafte Ausgestaltungen des erfindungsgemäßen Gegenstandes sind in den Unteransprüchen angegeben und werden anhand eines in den Zeichnungen dargestellten Ausführungsbeispiels näher erläutert. Dabei zeigen:
- Fig. 1:: prinziphaft eine Explosionsdarstellung eines solchen elektrischen/elektronischen Installationsgerätes, räumlich in Vorderansicht;
- Fig. 2:: prinziphaft eine Explosionsdarstellung eines solchen elektrischen/elektronischen Installationsgerätes, räumlich in Rückansicht;
- Fig. 3:: prinziphaft ein gemäß Figur 1 ausgeführtes elektrisches/elektronisches Installationsgerät in Zuordnung eines ersten mobilen Kleingerätes;
- Fig. 4:: prinziphaft ein gemäß Figur 1 ausgeführtes elektrisches/elektronisches Installationsgerät in Zuordnung eines zweiten mobilen Kleingerätes.

Wie aus den Figuren hervorgeht, besteht ein solches elektrisches/elektronisches Installationsgerät im Wesentlichen aus einem wannenförmig ausgeführten Sockelteil 1, welches rückseitig Verbindungselemente 2 zum Anschluss an ein Installationssystem eines Gebäudes aufweist, und welches frontseitig zur Aufnahme einer Ladeeinrichtung 3 vorgesehen ist. Die Ladeeinrichtung 3 ist zur Versorgung mit elektrischer Energie an das Verbindungselement 2 angeschlossen und weist drei Ladespulen 4 zur induktiven Energieübertragung auf Zudem ist die Ladeeinrichtung 3 frontseitig von einer, am Sockelteil 1 festlegbaren Zwischenplatte 5 abgedeckt. Die Zwischenplatte 5 ist frontseitig mit zwei Koppelelementen 6 zur Halterung zumindest eines beliebig gestalteten, mobilen elektrischen/elektronischen Gerätes G (mobiles Kleingerät) versehen. Solche mobilen Kleingeräte G weisen üblicherweise eine Empfangseinrichtung zum induktiven Energieladen auf. Frontseitig sind die beiden Koppelelemente 6 von einer formschönen Designabdeckung 7 umgeben, welche ihrerseits frontseitig den formschönen Abschluss des elektrischen/elektronischen Installationsgerätes darstellt. Die beiden Koppelelemente 6 sind jeweils als Haftpad mit Nanostmktur ausgeführt, die eine vakuumeffektartige Haltewirkung für das zugeordnete mobile Kleingerät G entwickeln. Das bedeutet, ohne weitere mechanische Haltemaßnahmen bzw. Haltemittel können, beliebige Bauformen aufweisende, von verschiedenen Herstellern angebotene, mobile Kleingeräte durch einfaches Aufsetzen auf das Haftpad mit Nanostruktur (Koppelelemente 6) haltend am elektrischen/elektronischen Installationsgerät festgelegt bzw. mit diesem gekoppelt werden. Das Haftpads mit Nanostruktur kann auch als Haftmatte mit Nanostruktur oder als Nanogrip-Pad bezeichnet werden. Um besonders gute Koppeleigenschaften zu gewährleisten und sich optisch von einer Schaltwippe eines elektrischen Schaltgerätes deutlich zu unterscheiden, besteht jedes der beiden Koppelelemente 6 aus einem scheibenförmigen ersten Koppelsegment 6a und einen, das erste Koppelelement 6a ringförmig umgebenden zweiten Koppelelement 6b. Damit für den Benutzer der Ladevorgang der Ladeeinrichtung eines solchen elektrischen/elektronischen Installationsgerätes deutlich erkennbar ist, ist eine, einen Lichtleiter aufweisende Statusanzeige 8 am Sockelteil 1 vorhanden, welche zur Versorgung mit elektrischer Energie seines Leuchtmittels an das Verbindungselement 2 angeschlossen ist. Damit ein solches elektrisches/elektronisches Installationsgerät auf bekannte Art und Weise an einer Installationsdose 9 befestigt werden kann, sind am Sockelteil 1 entsprechend ausgeführte Befestigungsmöglichkeiten in Form von Löchern und Langlöchern vorgesehen, die eine derartige Befestigung auf einfache Art und Weise ermöglichen.

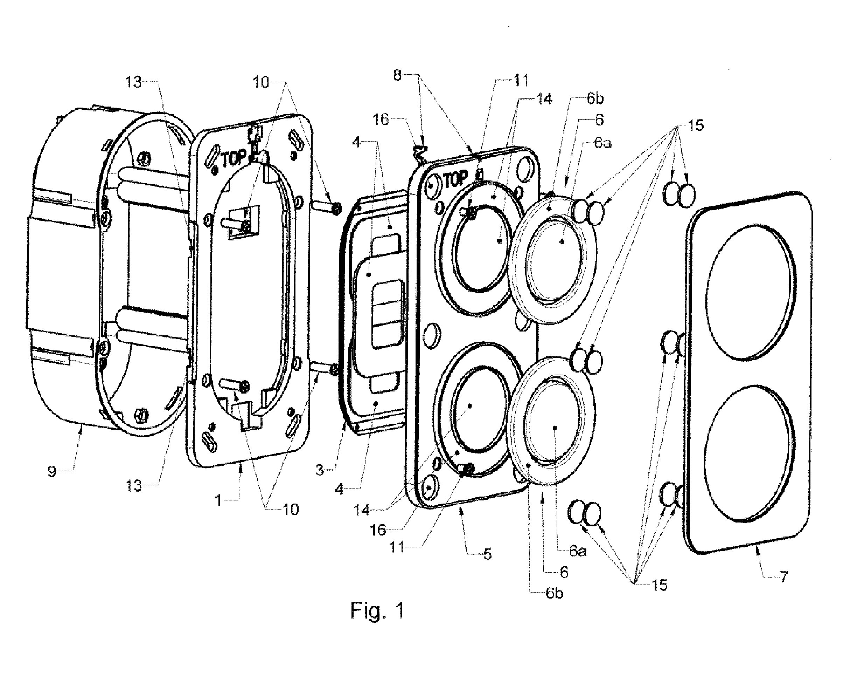

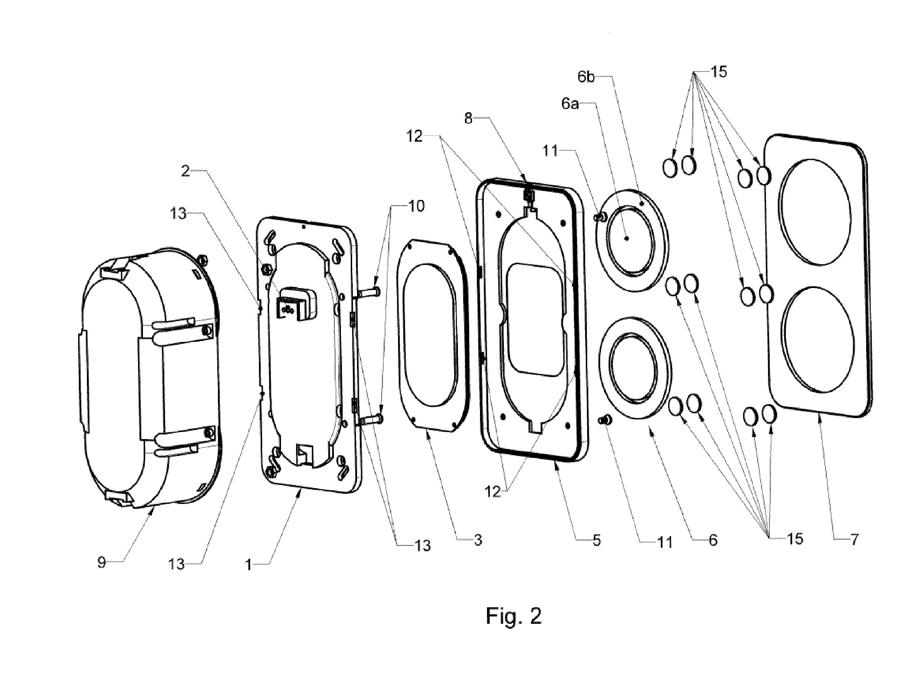

Wie des Weiteren insbesondere aus Figur 1 und Figur 2 hervorgeht, wird das Sockelteil 1 über vier erste Schrauben 10 an der Installationsdose 9 festgelegt. Wie bereits beschrieben, nimmt das Sockelteil 1 die Ladeeinrichtung 3 wannenförmig auf und ist frontseitig von einer Zwischenplatte 5 abgedeckt. Die Zwischenplatte 5 ist ihrerseits über vier zweite Schrauben 11 und eine Rastverbindung am Sockelteil 1 festgelegt. Die Rastverbindung besteht dabei aus vier, an die Zwischenplatte 5 angeformte Rastnasen 12, welche verrastend mit entsprechend ausgeführten und angeordneten Rastausnehmungen 13 zusammenwirkt, welche in das Sockelteil 1 eingeformt sind. Die Haftpads mit Nanostruktur (Koppelelemente 6 beziehungsweise erste Koppelsegmente 6a und zweite Koppelsegmente 6b) sind über eine Klebeverbindung frontseitig an der Zwischenplatte 5 festgelegt. Um eine genaue Positionierung der beiden ersten Koppelsegmente 6a und der beiden zweiten Koppelsemente 6b vornehmen zu können, ist die Frontseite der Zwischenplatte 5 mit entsprechend ausgeformten Positionieningsbereichen 14 versehen. Um die Designabdeckung 7 wiederlösbar mit der Zwischenplatte 5 haltend zu verbinden, sind sechs Klettverbindungen (zum Beispiel Dual Lock Pads) vorgesehen, welche jeweils aus zwei Klettelementen 15 bestehen. Mit ihrer Rückseite werden sechs der zwölf Klettelemente 15 mit der Frontseite der Zwischenplatte 5 und sechs der zwölf Klettelemente 15 mit der Rückseite der Designabdeckung 7 verklebt. Um eine genaue Positionierung der zwölf Klettelemente 15 vornehmen zu können, sind in die Zwischenplatte 5 sechs Positionierhilfen 16, jeweils ausgeführt als Vertiefung, eingeformt. Um gegebenenfalls die beiden Koppelelemente 6 auf einfache Art und Weise austauschen zu können, können diese auch auf ein Trennelement aufgeklebt sein, welches seinerseits wiederlösbar mit der Zwischenplatte 5 verrastet und/oder verschraubt ist. Aus Gründen der Einfachheit ist eine solche Ausfühning in den Figuren nicht dargestellt.

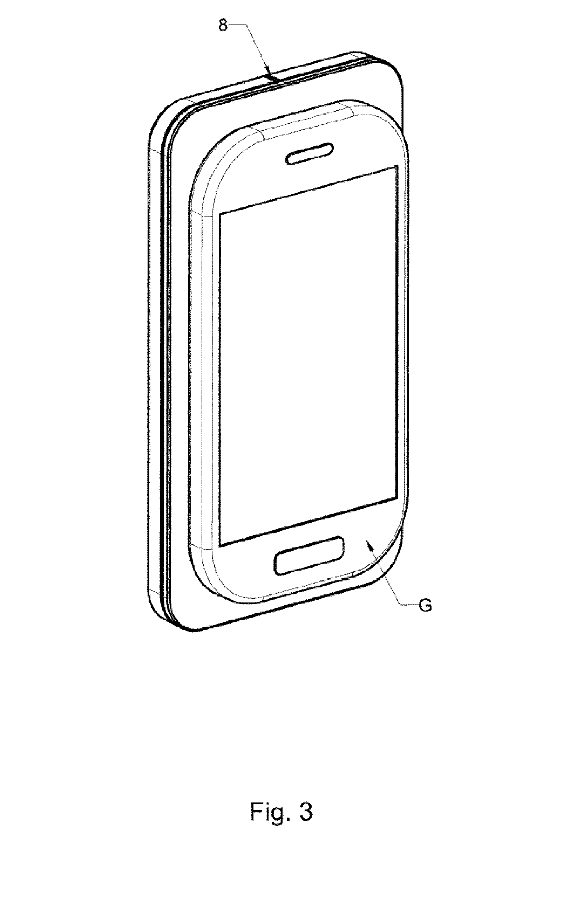

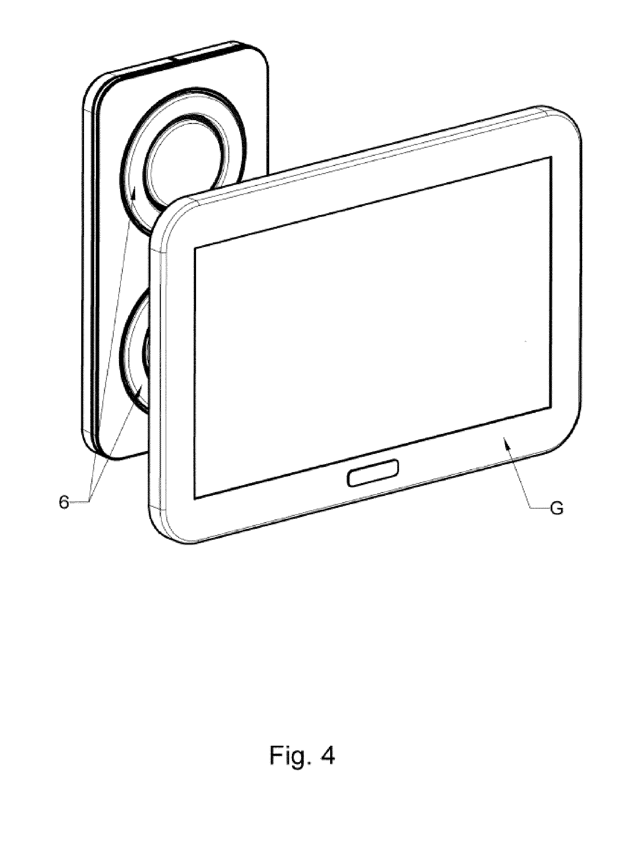

Wie insbesondere aus Figur 3 und Figur 4 hervorgeht, ist das elektrische/eisktronische Installationsgerät mit seinen beiden Koppelelementen 6 dazu geeignet, beliebig gestaltete mobile elektrische/elektronische Geräte G (mobile Kleingeräte) haltend aufzunehmen bzw. anzukoppeln. Wie insbesondere aus Figur 3 hervorgeht, ist ein solches mobiles Kleingerät G beispielsweise als Mobiltelefon (Smartphone) ausgeführt. Wie insbesondere aus Figur 4 hervorgeht, ist ein solches mobiles Kleingerät G als Tablet-PC ausgeführt. Selbstverständlich sind diese beiden mobilen Kleingeräte G nur Beispiele hinsichtlich der Kopplungsmöglichkeit des elektrischen/elektronischen Installationsgerätes.

Auf einfache Art und Weise kann ein solches elektrisches/elektronisches Installationsgerät auch mit einer - der Einfachheit halber nicht dargestellten - Einrichtung zur Nahfeldkommunikation ausgerüstet sein, die einen Datenaustausch via Funktechnik betreibt, um zum Beispiel ein vereinfachtes Koppeln von Bluetooth- /WLan-Verbindungen zu ermöglichen.

Durch das Andrücken eines mobilen Kleingerätes G an die Koppelelemente 6 kommt zum einen der haltende Vakuumeffekt zur Wirkung und wird beispielsweise zum anderen der induktive Ladevorgang gestartet. Hierbei wird elektrische Energie von den drei Ladespulen 4 der Ladeeinrichtung 3 auf die, sich im mobilen Kleingerät G befindliche Receiverspule übertragen. Die Energieübertragung erfolgt beim vorliegenden Ausfühningsbeispiel nach dem Standard Qi des Wireless Power Consortiums zur drahtlosen Energieübertragung mittels elektromagnetischer Induktion über kurze Distanzen. Qi sorgt dabei für Interoperabilität zwischen dem elektrischen/elektronischen Installationsgerät und Ladegeräten und den zugeordneten mobilen Kleingeräten G verschiedener Hersteller. Es findet eine resonante induktive Kopplung zwischen dem elektrischen/elektronischen Installationsgerät und dem zugeordneten mobilen Kleingerät G statt. Es werden zudem Daten ausgetauscht, um eine optimale Energieübertragung zu gewährleisten. Die mobilen Kleingeräte G verschiedener Hersteller verwenden üblicherweise eine RFID-ähnliche Technik, um Daten an das elektrische/elektronische Installationsgerät zu übermitteln.

Zur induktiven Energieübertragung wird durch das elektrische/elektronische Installationsgerät ein magnetisches Wechselfeld erzeugt. Dies erfolgt mit Hilfe zumindest einer Ladespule 4, die von einem Wechselstrom durchflossen ist. Das zuzuordnende mobile Kleingerät G enthält ebenfalls eine Spule (Empfangseinrichtung zum induktiven Energieladen). Diese wird von einem Teil des magnetischen Wechselfelds durchdrungen. Dadurch wird in der Spule des mobilen Kleingerätes G eine Spannung induziert. Dieses bekannte Wirkprinzip entspricht dem eines Transformators mit schwacher Kopplung der Spulen. Somit ist es möglich, mobile Kleingeräte G auf einfache Art und Weise ohne umständliche Befestigung zu laden und gleichzeitig zu bedienen, während diese durch die Koppelelemente 6 fest an dem elektrischen/elektronischen Installationsgerät gehalten werden.

Die beiden Koppelelemente 6 bestehen aus einem speziellen Polyurethan, welche durch eine kraterartige Oberfläche für den zur Haltewirkung notwendigen Vakuumeffekt sorgen. Bei leichtem Ablegen von glatten Gegenständen (mobile Kleingeräte G) haften diese bereits sehr stark auf der Oberfläche der beiden Koppelelemente 6. Bei leichtem Andrücken eines mobilen Kleingerätes G entsteht eine noch stärkere Haltewirkung durch den Vakuumeffekt, wie man es zum Beispiel von einem Saugnapf kennt.

Auf einfache Art und Weise ist ein elektrisches/elektronisches Installationsgerät realisiert, welches, ohne bauliche Änderungen vornehmen zu müssen, in der Lage ist, mobile elektrische/elektronische Geräte G (mobile Kleingeräte) mit beliebigen Bauformen haltend aufzunehmen und für deren Aufladung mit elektrischer Energie Sorge zu tragen. Bei solchermaßen ausgebildeten elektrischen/elektronischen Installationsgeräten ist besonders vorteilhaft, dass sich diese besonders einfach in bestehende Designlinien, auch von, bereits im Markt befindlicher elektrischer/elektronischer Installationsgeräte integrieren lassen und zur haltenden Aufnahme von mobilen Kleingeräten G über Haltemittel verfügen, welche nicht um einen wesentlichen Teil über die frontseitige Oberfläche hinausstehen.

### Bezugszeichenliste

- 1: Sockelteil
- 2: Verbindungselemente
- 3: Ladeeinrichtung
- 4: Ladespule
- 5: Zwischenplatte
- 6: Koppelemente
- 6a: Erste Koppelsegmente
- 6b: Zweite Koppelsegmente
- 7: Designabdeckung
- 8: Statusanzeige
- 9: Installationsdose
- 10: Erste Schrauben
- 11: Zweite Schrauben
- 12: Rastnasen
- 13: Rastausnehmungen
- 14: Positionieningsbereiche
- 15: Klettelemente
- 16: Positionierhilfen

- G: Mobiles elektrisches/elektronisches Gerät (mobiles Kleingerät)

## Patentansprüche

1. Elektrisches/elektronisches Installationsgerät mit einem wannenförmig ausgeführten Sockelteil, welches rückseitig Verbindungselemente zum Anschluss an ein Installationssystem eines Gebäudes aufweist, und welches frontseitig zur Aufnahme einer Ladeeinrichtung vorgesehen ist, wobei die Ladeeinrichtung (3) zumindest eine Ladespule (4) zur induktiven Energieübertragung aufweist, **dadurch gekennzeichnet, dass** die Ladeeinrichtung (3) frontseitig von einer am Sockelteil (1) festlegbaren Zwischenplatte (5) abgedeckt ist, und dass die Zwischenplatte (5) frontseitig mit zumindest einem Koppelelement (6) zur Halterung zumindest eines beliebig gestalteten, mobilen elektrischen/elektronischen Gerätes (G) versehen ist, welches zumindest eine Empfangseinrichtung zum induktiven Energieladen aufweist.

2. Elektrisches/elektronisches Installationsgerät nach Anspruch 1, **dadurch gekennzeichnet, dass** frontseitig zumindest eine, das zumindest eine Koppelelement (6) formschön umgebende Designabdeckung (7) vorgesehen ist, welche haltend mit der Zwischenplatte (5) und/oder dem Sockelteil (1) in Verbindung steht.

3. Elektrisches/elektronisches Installationsgerät nach Anspruch 1 oder 2, **dadurch gekennzeichnet, dass** zumindest zwei Koppelelemente (6) vorgesehen sind.

4. Elektrisches/elektronisches Installationsgerät nach einem der Ansprüche 1 bis 3, **dadurch gekennzeichnet, dass** zumindest ein Koppelelement (6) als ein, eine vakuumeffektartige Haltewirkung für das zumindest eine zugeordnete mobile elektrische/elektronische Gerät (G) entwickelndes Haftpad mit Nanostmktur ausgeführt ist.

5. Elektrisches/elektronisches Installationsgerät nach einem der Ansprüche 1 bis 4, **dadurch gekennzeichnet, dass** für den Ladevorgang der Ladeeinrichtung eine Statusanzeige (8) vorgesehen ist.

6. Elektrisches/elektronisches Installationsgerät nach einem der Ansprüche 1 bis 5, **dadurch gekennzeichnet, dass** zumindest eine haltende Verbindung zwischen dem Sockelteil (1), der Zwischenplatte (5) und/oder der Designabdeckung (7) als Schraubverbindung ausgeführt ist.

7. Elektrisches/elektronisches Installationsgerät nach einem der Ansprüche 1 bis 6, **dadurch gekennzeichnet, dass** zumindest eine haltende Verbindung zwischen dem Sockelteil (1), der Zwischenplatte (5) und/oder der Designabdeckung (7) als Rastverbindung ausgeführt ist.

8. Elektrisches/elektronisches Installationsgerät nach einem der Ansprüche 1 bis 6, **dadurch gekennzeichnet, dass** zumindest eine haltende Verbindung zwischen dem Sockelteil (1), der Zwischenplatte (5) und/oder der Designabdeckung (7) als Klettverbindung ausgeführt ist.

9. Elektrisches/elektronisches Installationsgerät nach einem der Ansprüche 1 bis 8, **dadurch gekennzeichnet, dass** dem Sockelteil (1) rückseitig zumindest ein, eine haltende Verbindung an einer Installationsdose (10) ermöglichendes Trägerteil zugeordnet ist.

10. Elektrisches/elektronisches Installationsgerät nach einem der Ansprüche 1 bis 9, **dadurch gekennzeichnet, dass** zwischen zumindest einem Koppelelement (6) und der Zwischenplatte (5) ein Trennelement vorhanden ist, welches zum einfachen Austausch mit der Zwischenplatte (5) verrastet und/oder verschraubt ist.

11. Elektrisches/elektronisches Installationsgerät nach einem der Ansprüche 1 bis 10, **dadurch gekennzeichnet, dass** an der Zwischenplatte (5) und/oder der Designabdeckung (7) eine Einrichtung zur Nahfeldkommunikation vorhanden ist.
